# EUROPÄISCHE PATENTSCHRIFT

(11) **EP 3 266 509 B1**
(45) Veröffentlichungstag und Bekanntmachung des Hinweises auf die Patenterteilung: **14.04.2021**
(21) Anmeldenummer: 17001129.0
(22) Anmeldetag: 03.07.2017
(51) Int. Cl.: B01D 46/24, B01D 46/00

(54) **ABSCHEIDEFILTER**
SEPARATION FILTER
FILTRE COLLECTEUR

(30) Priorität: 08.07.2016 DE 102016008316
(43) Veröffentlichungstag der Anmeldung: 10.01.2018
(73) Patentinhaber: HOSOKAWA ALPINE Aktiengesellschaft, 86199 Augsburg (DE)
(72) Erfinder: Kuhnen, Michael, 87665 Mauerstetten (DE); Rottländer, Marius, 86163 Augsburg (DE); Ligotky, Markus, 86159 Augsburg (DE)

(56) Entgegenhaltungen:
- EP-A2- 1 034 830
- DE-A1-102006 061 329
- DE-U1- 20 022 430
- JP-A- S63 232 816
- JP-A- 2005 046 695
- JP-A- 2009 279 718

## Beschreibung

Die Erfindung richtet sich auf ein Abscheidefilter und Verfahren zum Aus- und Einbau von Filterelementen in ein Abscheidefilter.

### Einleitung

Abscheidefilter dienen der Rückgewinnung von Produkten oder Stäuben aus einem Luftstrom, beispielsweise bei Mahl- und/oder Windsichtanlagen.

Hierzu werden Filtermedien wie Staubfilter, Filterschläuche, Filterelemente oder Filterkartuschen in einer Kopfplatte des Filters montiert, welche die Trennung zwischen partikelbeladener Luft des Rohgases und partikelfreier Luft des Reingases darstellt. Rohgasseitig werden die Filtermedien durch die partikelbeladene Luft durchströmt, die Partikel werden an der Filterfläche des Filtermediums abgeschieden und die nahezu partikelfreie Luft durchströmt die Filtermedien. Reingasseitig wird die Luft über einen zentralen Abluftstutzen abgeführt.

Die Filtermedien können über die Zeit durch Druckluftstöße abgereinigt werden, um den entstandenen Filterkuchen abzuwerfen und den Differenzdruck am Filter konstant zu halten. Dazu sind Blasrohre oberhalb der Filtermedien angebracht, durch die die Druckstöße in das Filtermedium eingebracht werden.

Nach Beendigung der Produktion, bei Produktwechsel oder bei festgestellter Fehlfunktion einzelner Filtermedien z.B. durch Beschädigung oder fehlerhafter Montage, kann es notwendig sein, einzelne oder alle Filtermedien zu demontieren oder auszutauschen. Ein gängiges Verfahren ist das Demontieren der Filtermedien nach oben zur Reingasseite hin. Dafür wird der Filterkopf geöffnet oder demontiert, die Filtermedien aus ihrer Befestigung gelöst und nach oben entnommen und durch Neue ersetzt.

Bei der Verarbeitung gesundheitsschädlicher oder umweltgefährdender Stoffe kommt es ohne weitere Schutzmaßnahmen zur Freisetzung von Partikeln in die Umgebung oder zu Hautkontakt beim Berühren von partikelbesetzten Oberflächen.

### Stand der Technik

Bei der Demontage der Filtermedien ist deshalb persönliche Schutzausrüstung vorzusehen, diese Maßnahme verhindert aber nicht eine Emission von Partikeln in die Umgebung.

Bei kleinen Baugrößen des Abscheidefilters gibt es Lösungen Ober flexible Isolatoren (Zelt) mit integrierten Handschuhen. Um diese zu verwenden, muss in der Regel der Filterkopf angehoben werden um das Zelt aufzuspannen. Somit steht das flexible Containment zwischen dem Filterkopf und dem Filtergehäuse. Einschränkungen gibt es bei diesen Lösungen hinsichtlich dem Entfernen und/oder der Reinigung des Zeltes sowie der Abdichtung des Zeltes gegenüber den inneren Druckverhältnissen im Filter, Diese Problematik verschärft sich bei druckstoßfester Bauweise, d. h. Absicherung des Filters gegen Explosionsdrücke von bis zu 10 bar (ü).

Um die Freisetzung der Partikel in die Umgebung oder den Hautkontakt zu vermeiden, werden entsprechende Stoffe in Containments, auch Isolatoren genannt, verarbeitet. Hierdurch wird die komplette Anlage aus Apparaten und Maschinen von der Umgebung isoliert. In der DE 10 2006 061 329 A1 ist ein entsprechender Isolator mit einem gattungsgemäßen Filter offenbart. Hierbei ist die Filtereinheit als Filterkammer ausgeführt und das Filtergehäuse teitweise durch einen flexiblen Filtermantel ersetzt worden, welcher eine zusätzliche Filterfläche zu den Filterschläuchen darstellt. Das Filter ist integraler Bestandteil eines Isolators.

Abscheidefilter, bei denen die Filterelemente durch Öffnungen in den Gehäuseseitenwänden gewechselt werden, sind in der EP1034830 und JPS63232816 offenbart.

### Aufgabe

Der Erfindung liegt daher die Aufgabe zugrunde eine Lösung zu schaffen, die es ermöglicht konventionelle Abscheidefilter so zu gestalten, dass es zu keiner Freisetzung von Partikeln in die Umwelt oder zu Hautkontakt beim Berühren von partikelbesetzten Oberflächen während eines Filtermedienausbaus und/oder Filterelementeeinbaus kommt. Außerdem soll die Erfindung ein einfaches Nachrüsten von konventionellen bzw. bestehenden Abscheidefiltern ermöglichen. Des Weiteren liegt der Erfindung die Aufgabe zugrunde ein Verfahren zum Filtermedienausbau und/oder -einbau bei einem solchen Abscheidefilter zu finden.

### Lösung

Bei einem Abscheidefilter der eingangs beschriebenen Art wird die Aufgabe erfindungsgemäß durch das Kennzeichen des Hauptanspruchs gelöst. Bei Verfahren zum Filtermedienausbau und/oder -einbau wird die Aufgabe durch das Kennzeichen der Ansprüche 4, 5 und 6 gelöst.

### Beschreibung der Erfindung

Bei der vorliegenden Erfindung wird ein klassisches Abscheidefilter um eine Ebene ergänzt. Hierzu wird oberhalb der Kopfplatte des Filters und unterhalb des Filterkopfs das Filtergehäuse des Reingasraums verlängert. Alternativ wird der Reingasraum durch ein weiteres Filtergehäuseelements erweitert. Der Reingasraum weist Handschuheingriffe und Stutzen auf. Die Stutzen weisen eine Aufnahme für Plastikschläuche auf. Das Filtermedium wird mit Hilfe des Handschuheingriffs ausgebaut und von innen über den Stutzen in den Plastikschlauch eingeführt. Der Plastikschlauch wird hinter dem Filterelement abgebunden und abgeschnitten. Das Filtermedium wird im Plastikschlauch entsorgt oder einem Recyclingprozess zugeführt. So ist es möglich das Filtermedium aus dem Abscheidefilter auszubauen ohne das es zum Hautkontakt des Bedieners mit dem Produkt kommt oder Produkt in die Umgebung entweicht.

Oberhalb des Reingasraums ist eine Abdeckplatte installiert. Oberhalb der Abdeckplatte ist ein demontierbarer Filterkopf installiert, um die Abdeckplatte gegen die Drücke innerhalb des Filters abzusichern. Die Abdeckplatte weist Handschuheingriffe auf. Außerdem weist die Abdeckplatte Stutzen auf, auf die Plastikschläuche oder Plastikbeutel montiert werden. Sollen nun ein oder mehrere Filtermedien ausgebaut werden, wird der Filterkopf demontiert. Der Reingasraum ist durch die Abdeckplatte gegen die Umwelt abgeschlossen. Durch die Handschuheingriffe löst der Bediener die Filtermedien aus ihrer Befestigung. Die demontierten Filtermedien werden mit Hilfe der Handschuhe von innen in den am Stutzen montierten Plastikschlauch eingeführt. Der Plastikschlauch wird dann von außen abgebunden und abgeschnitten.

Das Abscheidefilter weist jeweils ein oder mehrere Handschuheingriffe und ein oder mehrere Stutzen auf.

Als Filtermedien werden Staubfilter, Filterschläuche, Filterelemente oder Filterkartuschen eingesetzt.

Die Abdeckplatte besteht aus vollständig transparentem Material oder ist teilweise mit transparenten Elementen, wie ein Schauglas bestückt. So ist die Möglichkeit geboten das Arbeiten im Filter zu beobachten. Die Abdeckplatte kann auch nichttransparent ausgeführt sein.

Der Stutzen nimmt Filterschläuche, Plastiktüten, Endlosschläuche oder speziell konfektionierte Plastikbeutel, welche die Funktion von Handschuh und Beutel in sich vereint, auf.

Die Montage neuer Filtermedien wird ebenfalls über diese Stutzen realisiert. Je nachdem, wie kritisch die Partikelemissionswerte sind, können hierbei verschiedene Verfahren angewendet werden.

Bei einem ersten Verfahren zum partikelemissionsarmen Einbau von Filtermedien in ein Abscheidefilter wird an das Filterinnere ein leichter Unterdruck angelegt und durch den offenen Stutzen eine nach innen gerichtete Luftströmung mit einer entsprechenden Mindestgeschwindigkeit erzeugt. Dann werden die Filtermedien durch den offenen Stutzen führt, ohne daß Partikel aus dem Inneren des Filters nach außen wandern.

Bei strengeen Grenzwerten können neue Filtermedien nach dem "safe-change"-Verfahren über die Stutzen eingebracht werden. Bei diesem partikelemmisionsarmen Verfahren zum Aus- und Einbau von Filtermedien sind die Stutzen zu jedem Zeitpunkt durch einen geschlossenen Plastikschlauch abgedeckt.

Zunächst wird der Filterkopf demontiert. Der Stutzen ist über den Plastikschlauch verschlossen. Der Stutzen ist typischerweise mit zwei hintereinander liegenden O-Ring-Nuten ausgerüstet. Das neue Filtermedium wird dann innerhalb eines neuen Plastikschlauchs an den Stutzen angebracht und das offene Ende des Plastikschlauchs über den bestehenden Plastikschlauch gestülpt und auf der hinten liegenden O-Ring-Nut befestigt. Sobald der außenliegende Plastikschlauch fest angeschlossen ist, wird der jetzt innenliegende Plastikschlauch entfernt und das Filtermedium nach innen eingeführt. Es wird dann in die Kopfplatte eingebaut. Der Filterkopf wird montiert und das Filter geht in Betrieb.

Zum Ausbau des Filtermediums wird der Filterkopf zunächst demontiert, das Filtermedium über die Handschuheingriffe aus der Kopfplatte gelöst, in den mit Plastikschlauch abgedeckten Stutzen eingeführt und nach außen geführt. Dort wird der Plastikschlauch hinter dem Filtermedium abgebunden und abgeschnitten.

Bei der Verwendung von Endlosschläuchen auf den Stutzen wird das Filtermedium zunächst in den einseitig abgebundenen Endlosschlauch eingeführt, von der zweiten Seite abgebunden, durch den Stutzen in das Abscheidefilter eingeführt, dort abgeschnitten, aus der Plastikhülle befreit und eingebaut. Wird das Filtermedium wieder ausgebaut, wird es in den Endlosschlauch eingeführt und über den Stutzen aus dem Abscheidefilter gebracht. Dort wird der Endlosschlauch hinter dem Filtermedium abgebunden. Das Filtermedium im Schlauch wird nun abgeschnitten und nachfolgenden Prozessen zugeführt.

Handelt es sich um ein abreinigbares Filter, welches im Reingasraum mit Blasrohren ausgerüstet ist, müssen diese zum Entfernen der Filtermedien im geschlossenen Gehäuse demontiert werden. Hierzu können Blasrohre eingesetzt werden, die innen durch eine schnell lösbare Verbindung wie zum Beispiel eine Bajonett-Verbindung demontiert und im Filtergehäuse beiseitegelegt werden.

Durch die Demontage der Filtermedien kann zudem die Reinigbarkeit des Filtergehäuses im geschlossenen Zustand zum Beispiel mit Hilfe von Waschdüsen deutlich verbessert werden.

Der Filtermedienaus- und -einbau ist eine der am stärksten partikel- bzw. staubbelasteten Wartungsarbeiten an entsprechenden Anlagen. Die Sicherheit für Bedienpersonal und Umgebung werden durch die staubfreie Arbeitsweise wesentlich verbessert. Als technische Schutzmaßnahme stellt die Erfindung die bevorzugte Variante gegenüber persönlicher Schutzausrüstung dar. Ein weiterer Vorteil der Erfindung liegt darin, dass Abscheidefilter nahezu jeder Baugröße mit einem solchen Prinzip ausgerüstet werden können, sodass auch bei Großanlagen der Filterwechsel staubfrei und ohne Hautkontakt erfolgen kann. Die Erfindung ermöglicht eine Nachrüstung bestehender Abscheidefilter. Hierzu ist in das bestehende Abscheidefilter ein Reingasraumgehäuseelement und oberhalb des Reingasraums eine Abdeckplatte einzubauen und Handschuheingriffe und Stutzten in die Abdeckplatte einzubauen.

### Figuren

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in den beispielhaft ein bevorzugtes Ausführungsbeispiel der Erfindung dargestellt ist.
Fig. 1 zeigt ein Ausführungsbeispiel des erfindungsgemäßen Abscheidefilters ohne Filterkopf
Fig. 2 zeigt den Stutzen mit Plastikschlauch und Filtermedium als Ausschnitt.

### Beschreibung der Figuren

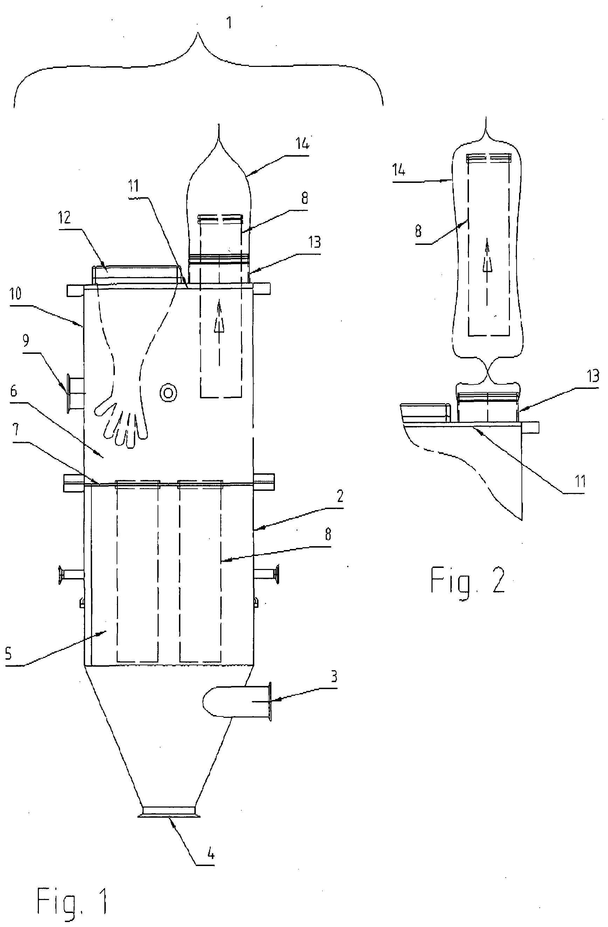

Die Ausführungsform nach Figur 1 zeigt ein erfindungsgemäßes Abscheidefilter. Das Filter 1 ist in einen Rohgasraum 5 und einen Reingasraum 6 durch eine Kopfplatte 7 Rohgaszuführung 3 und dem Produktaustrag 4. Abgeschlossen wird das rohgasseitige Gehäuseteil durch die Kopfplatte 7 in der die Filtermedien 8 angeordnet und befestigt sind. Das Filtermedium 8 ist ein Filterschlauch oder ein Filterelement. Darüber schließt sich das Gehäuse des Reingasraums 6 mit der Reingasabführung 9 an. Der Filterkopf ist nicht dargestellt. Der Reingasraum 6 wird axial unten von der Kopfplatte 7 begrenzt und axial oben von einer Abdeckplatte 11 abgeschlossen: Diese Abdeckplatte 11 dichtet den Reingasraum 5 gegen die Umgebung ab. Sie ist in einer vorteilhaften Ausgestaltung ganz aus transparentem Material wie Plexiglas oder sie weist ein Schauglas auf. Hierdurch kann die Manipulation im Filter verfolgt werden. Außerdem ist in der Abdeckplatte 11 ein Handschuheingriff 12 angeordnet. Des Weiteren weist die Abdeckplatte 11 einen Stutzen 13 auf. Der Stutzen 13 nimmt einen Plastikschlauch 14 auf, welcher an seinem oberen Ende verschlossen ist.

Bei einem Filtermedienausbau wird zunächst der nicht dargestellte Filterkopf montiert und über den Handschuheingriff 12 das Filtermedium 8 aus der Kopfplatte 7 gelöst und zum Stutzen 13 geführt. Das Filtermedium 8 wird über den Stutzen 13 in den einseitig verschlossenen Plastikschlauch 14 eingeführt und der Plastikschlauch 14 wird hinter dem Filtermedium 8 abgebunden und abgeschnitten. So ist während des kompletten Ausbaus des Filtermediums das Abscheidefilter (Rohgasraum und Reingasraum) gegen die Umgebung abgeschlossen und der Ausbau erfolgt partikelemmisionsarm. Das Filtermedium 8 wird im Plastikschlauch 14 geschlossen entsorgt.

Das Filtergehäuse 2 kann nun gereinigt werden. Danach wird ein neues Filtermedium 8 eingebaut.

Für den Einbau eines neuen Filtermediums 8 wird dieses in einen Plastikschlauch 14 eingeführt, der an einem Ende verschlossen ist. Der Stutzen 13 an der Abdeckplatte 11, die den Reingasraum 6 des Filters 1 abdichtet, ist vom Ausbau des Filtermediums 8 noch durch den abgebundenen Plastikschlauch 14 verschlossen. Der Plastikschlauch 14 des einzubauenden Filtermediums 8 wird an den Stutzen 13 angebracht und über den bestehenden Plastikschlauch 14 gestülpt. Dazu weist der Stutzen 13 zwei O-Ring-Nuten auf. Auf der einen O-Ring-Nut ist ein geschlossener Plastikschlauch 14 montiert. Auf der zweiten O-Ring-Nut wird nun ein geschlossener Plastikschlauch 14 mit dem neuen Filtermedium 8 montiert. Sobald der außenliegende Plastikschlauch 14 fest angeschlossen ist, wird der innenliegende Plastikschlauch 14 nach innen entfernt und das Filtermedium 8 nach innen eingeführt. Das Filtermedium 8 wird dann in die Kopfplatte 7 eingebaut. Nach dem Aufsetzen d.h. montieren des Filterkopfs kann das Abscheidefilter den Betrieb aufnehmen.

### Bezugszeichen

1 Abscheidefilter
2 Filtergehäuse
3 Rohgaszuführung
4 Produktaustrag
5 Rohgasraum
6 Reingasraum
7 Kopfplatte
8 Filterelemente
9 Reingasabführung
10 Reingasraumgehäuse
11 Abdeckplatte
12 Handschuheingriff
13 Stutzen
14 Folienschlauch

## Patentansprüche

1. Abscheidefilter 1 zum Reinigen von partikelbeladenen Gasen, welcher ein Filtergehäuse 2 mit Rohgaszuführung 3, Reingasabführung 9 und Produktaustrag 4 umfasst sowie eine einen Rohgasraum 5 und einen Reingasraum 6 trennende Kopfplatte 7, wobei die Kopfplatte 7 mindestens eine Öffnung bestückt mit einem Filtermedium 8 aufweist
**dadurch gekennzeichnet, dass**
der Reingasraum 6 mit Reingasabführung 9 axial unten von der Kopfplatte 7 und axial oben von der Abdeckplatte 11 abgeschlossen ist,
wobei die Abdeckplatte 11 den Reinraum 6 gegen die Umgebung abschließt und ein demontierbarer Filterkopf die Abdeckplatte gegen innere Drücke absichert und dass die Abdeckplatte 11 Handschuheingriffe 12 und Stutzen 13 mit Plastikschlauch 14 oder Plastikbeutel zum Aus- und Einbau der Filtermedien 8 aufweist.

2. Abscheidefilter 1 nach Anspruch 1 **dadurch gekennzeichnet, dass** die Abdeckplatte 11, die den Reingasraum 5 nach oben abdichtet, ganz, teilweise oder nicht aus transparenten Elementen besteht

3. Abscheidefilter 1 nach Anspruch 1 oder 2 **dadurch gekennzeichnet, dass** der Stutzen 13 einen Plastikschlauch 14 in Form eines Endlosschlauchs aufnimmt.

4. Verfahren zum partikelemissionsreduzierten Ausbau von Filtermedien 8 aus einem Abscheidefilter 1 nach den Ansprüchen 1 bis 3 **dadurch gekennzeichnet, dass**
das Verfahren folgende Schritte umfasst:
- Demontieren des Filterkopfs
- Ausbau des Filtermediums 8 aus der Kopfplatte 7 mit Hilfe der Handschuheingriffe
- Einführen des Filtermediums 8 in einen endseitig verschlossenen Plastikschlauch 14 über den Stutzen 13 mit Hilfe der Handschuheingriffe
- Abbinden des Plastikschlauchs 14 hinter dem Filtermedium 8 und vor dem Stutzen 13
- Abschneiden des im Plastikschlauch abgebundenen Filterelements 8.

5. Verfahren zum partikelemissionsarmen Einbau von Filtermedien 8 in einen Abscheidefilter 1 nach den Ansprüchen 1 bis 3 **dadurch gekennzeichnet, dass** das Verfahren folgende Schritte umfasst:
- Einführen eines Filtermediums 8 in einen endseitig verschlossenen Plastikschlauch 14
- Befestigen des Plastikschlauches 14 mit dem Filtermediums 8 am Stutzen 13
- Entfernen des vom Ausbau auf dem Stutzen 13 befindlichen Plastikschlauches mit Hilfe der Handschuheingriffe
- Einführen des Filtermediums 8 in den Reingasraum 6 mit Hilfe der Handschuheingriffe
- Einbau des Filtermediums 8 in die Kopfplatte 7 mit Hilfe der Handschuheingriffe
- Montieren des Filterkopfs

6. Verfahren zum partikelemissionsarmen Einbau von Filtermedien 8 in einen Abscheidefilter 1 nach den Ansprüchen 1 bis 3 **dadurch gekennzeichnet, dass** das Verfahren folgende Schritte umfasst:
- Demontieren des Filterkopfs
- Anlegen eines Unterdrucks an der Rohgasseite des Abscheidefilters 1, sodass am offenen Stutzen 13 eine nach innen gerichtete Luftströmung mit einer entsprechenden Mindestgeschwindigkeit erzeugt wird
- Einführen der Filtermedien 8 über die Stutzen 13
- Einbau der Filtermedien 8 in die Kopfplatte
- Montieren des Filterkopfs

## Claims

1. Separation filter 1 to filter particle-laden gases comprising a filter housing 2 with raw gas inlet 3, clean gas outlet 9 and product discharge 4 as well as a head plate 7 which separates the raw gas chamber 5 from the clean gas chamber 6, whereby the head plate 7 has at least one opening equipped with a filter medium 8
**characterised in that**
the clean gas chamber 6 with clean gas outlet 9 is sealed axially at the bottom by means of the head plate 7 and axially at the top by means of the cover plate 11, whereby the cover plate 11 seals the clean gas chamber 6 against the environment and
a removable filter head seals the cover plate against internal pressure and that the cover plate 11 has a glove port 12 and a socket 13 with plastic tube 14 or plastic bag to permit exchange of the filter medium 8.

2. Separation filter 1 in accordance with Claim 1, **characterised in that** the cover plate 11 which seals the clean gas chamber 5 to the top is either completely, partially or not made of transparent elements.

3. Separation filter 1 in accordance with Claim 1 or 2, **characterised in that** the socket 13 accommodates a plastic tube 14 which has the form of a continuous tube.

4. Process to permit the removal of filter media 8 from a separation filter 1 in such a way that the particle emissions are reduced in accordance with Claims 1 and 3, **characterised in that**
the process includes the following steps:
- removal of the filter head;
- removal of the filter medium 8 from the head plate 7 with the aid of the glove ports;
- insertion of the filter medium 8 into a plastic tube 14 which is sealed at one end and placed over the socket 13 with the aid of the glove ports;
- tying of the plastic tube 14 downstream of the filter medium 8 and upstream of the socket 13;
- cutting off of the filter element 8 enclosed in the plastic tube.

5. Process to permit the installation of filter media 8 in a separation filter 1 in such a way that the particle emissions are reduced in accordance with Claims 1 and 3, **characterised in that**
the process includes the following steps:
- insertion of a filter medium 8 into a plastic tube 14 which is sealed at one end;
- fastening of the plastic tube 14 with the filter medium 8 on the socket 13;
- removal of the plastic tube located on the socket 13 subsequent to removal with the aid of the glove ports;
- insertion of the filter medium 8 into the clean gas chamber 6 with the aid of the glove ports;
- installation of the filter medium 8 in the head plate 7 with the aid of glove ports;
- installation of the filter head.

6. Process that permits the installation of filter media 8 in a separation filter 1 in such a way that the particle emissions are reduced in accordance with Claims 1 and 3, **characterised in that**
the process includes the following steps:
- removal of the filter head;
- application of a negative pressure to the raw gas side of the separation filter 1 so that an air flow which is directed inwards is generated at the open socket 13 with a corresponding minimum speed;
- insertion of the filter medium 8 via the socket 13;
- installation of the filter medium 8 in the head plate;
- installation of the filter head.

## Revendications

1. Filtre séparateur 1 pour la purification de gaz chargés de particules, qui comprend un boîtier de filtre 2 avec une alimentation en gaz brut 3, une évacuation de gaz propre 9 et une évacuation de produit 4, ainsi qu'une plaque de tête 7 séparant une chambre de gaz brut 5 et une chambre de gaz propre 6, la plaque de tête 7 présentant au moins une ouverture équipée d'un milieu filtrant 8
**caractérisé par le fait**
**que** la chambre de gaz propre 6 avec évacuation de gaz propre 9 est fermée axialement en bas par la plaque de tête 7 et axialement en haut par la plaque couvercle 11,
où la plaque couvercle 11 sépare la chambre de gaz propre 6 de l'environnement et
**qu'**une tête de filtre amovible sécurise la plaque couvercle contre les pressions internes et que la plaque couvercle 11 comporte des accès par manchons gantés 12 et des manchons 13 avec tube en plastique 14 ou sac en plastique pour le retrait et la mise en place des milieux filtrants 8.

2. Filtre séparateur 1 selon la revendication 1, **caractérisé par le fait que** la plaque couvercle11 qui étanchéifie la chambre de gaz propre 5 vers le haut est composée entièrement, partiellement ou non d'éléments transparents.

3. Filtre séparateur 1 selon la revendication 1 ou 2, **caractérisé par le fait que** le manchon 13 reçoit d'un tube en plastique 14 sous forme de tuyau flexible continu.

4. Procédé pour le retrait à émissions réduites de particules des milieux filtrants 8 d'un filtre séparateur 1 selon les revendications 1 et 3, **caractérisé par le fait que**
le procédé comprend les étapes suivantes :
- démontage de la tête du filtre
- retrait du milieu filtrant 8 de la plaque de tête 7 à l'aide des manchons gantés
- introduction du milieu filtrant 8 dans un tube en plastique 14 fermé à l'extrémité, par l'intermédiaire du manchon 13 à l'aide des manchons gantés
- interruption par moyen approprié du débit dans le tube en plastique 14 en aval du milieu filtrant 8 et en amont du manchon 13
- coupe du tube en plastique comportant le milieu filtrant 8.

5. Procédé pour la mise en place pauvre en émissions de particules de milieux filtrants 8 dans un filtre séparateur 1 selon les revendications 1 et 3, **caractérisé par le fait que**
le procédé comprend les étapes suivantes :
- introduction d'un milieu filtrant 8 dans un tube en plastique 14 fermé à l'extrémité
- fixation du tube en plastique 14 comportant le milieu filtrant 8 au manchon 13
- élimination du tube en plastique monté lors du retrait au manchon 13 à l'aide des manchons gantés
- introduction du milieu filtrant 8 dans la chambre de gaz propre 6 à l'aide des manchons gantés
- montage du milieu filtrant 8 dans la plaque de tête 7 à l'aide des manchons gantés
- montage de la tête du filtre.

6. Procédé pour la mise en place pauvre en émissions de particules de milieux filtrants 8 dans un filtre séparateur 1 selon les revendications 1 et 3, **caractérisé par le fait que**
le procédé comprend les étapes suivantes :
- démontage de la tête du filtre
- mise en dépression du côté de gaz brut du filtre séparateur 1 de manière à produire au niveau du manchon 13 ouvert un courant d'air orienté vers l'intérieur et ayant une vitesse minimale correspondante
- introduction des milieux filtrants 8 par l'intermédiaire des manchons 13
- montage des milieux filtrants 8 dans la plaque de tête
- montage de la tête du filtre.
